# EUROPÄISCHE PATENTSCHRIFT

(11) **EP 1 454 117 B1**
(45) Veröffentlichungstag und Bekanntmachung des Hinweises auf die Patenterteilung: **06.01.2010**
(21) Anmeldenummer: 02799049.8
(22) Anmeldetag: 30.11.2002
(51) Int. Cl.: G01F 23/284

(54) **VORRICHTUNG ZUR BESTIMMUNG UND/ODER ÜBERWACHUNG DES FÜLLSTANDES EINES FÜLLGUTS IN EINEM BEHÄLTER**
DEVICE FOR THE DETERMINATION AND/OR MONITORING OF THE FILLING LEVEL OF THE CHARGE IN A CONTAINER
DISPOSITIF POUR DETERMINER ET/OU SURVEILLER LE NIVEAU DE REMPLISSAGE D'UN CONTENEUR

(30) Priorität: 11.12.2001 DE 10160688
(43) Veröffentlichungstag der Anmeldung: 08.09.2004
(73) Patentinhaber: ENDRESS + HAUSER GMBH + CO., D-79689 Maulburg (DE)
(72) Erfinder: KLÖFER, Peter, 79585 Steinen (DE)
(74) Vertreter: Andres, Angelika Maria
(86) Internationale Anmeldenummer: PCT/EP2002/013538
(87) Internationale Veröffentlichungsnummer: WO 2003/050482

(56) Entgegenhaltungen:
- DE-A- 10 014 725
- US-A- 3 474 337

## Beschreibung

Die Erfindung bezieht sich auf eine Vorrichtung zur Bestimmung und/oder Überwachung des Füllstandes eines Füllguts bzw. der Lage der Grenzfläche zwischen zwei Medien oder Phasen in einem Behälter mit einer Signalerzeugungseinheit, die hochfrequente Meßsignale erzeugt, einer Einkoppeleinheit und einem Oberflächenwellenleiter, wobei die Meßsignale über die Einkoppeleinheit auf den Oberflächenwellenleiter eingekoppelt werden und über den Oberflächenwellenleiter in Richtung des Füllguts geführt werden, und einer Empfangs-/Auswerteeinheit, die direkt oder indirekt über die Laufzeit der an der Oberfläche bzw. Grenzfläche des Füllguts reflektierten Meßsignale den Füllstand des Füllguts bzw. die Lage der Grenzfläche in dem Behälter bestimmt. Vorrichtungen der vorgenannten Art sind allgemein unter dem Begriff TDR-Füllstandsmeßgeräte bekannt geworden.
Als Meßsignale werden entweder kurze elektromagnetische Hochfrequenz-impulse oder Bursts (TDR-Verfahren oder Puls-Radar-Verfahren) oder kontinuierliche frequenzmodulierte Mikrowellen (z. B. FMCW-Radar-Verfahren) an dem Oberflächenwellenleiter entlang geführt. Als Wellenleiter kommen die bekannten Varianten: Oberflächenwellenleiter nach Sommerfeld oder Goubau oder Lecherwellenleiter in Frage. TDR-Füllstandsmeßgeräte auf der Basis von geführten Mikrowellen-Impulsen werden übrigens von der Anmelderin unter der Bezeichnung Levelflex angeboten und vertrieben.

Physikalisch gesehen wird bei einem TDR-Meßgerät der Effekt ausgenutzt, daß an der Grenzfläche von zwei unterschiedlichen Medien, z. B. Luft und Öl oder Luft und Wasser, infolge der sprunghaften Änderung (Diskontinuität) der Dielektrizitätszahlen beider Medien ein Teil der geführten Impulse bzw. der geführten Mikrowellen reflektiert und über den Oberflächenwellenleiter zurück in eine Empfangsvorrichtung geleitet wird. Der reflektierte Anteil (→ Nutzechosignal) ist dabei um so größer, je größer der Unterschied in den Dielektrizitätszahlen der beiden Medien ist. Anhand der Laufzeit des reflektierten Anteils der Hochfrequenz-Impulse bzw. der FMCW-Signale (→ Echosignale) läßt sich die Entfernung zur Oberfläche des Füllguts bestimmen. Bei Kenntnis der Leerdistanz des Behälters kann der Füllstand des Füllguts in dem Behälter berechnet werden. Soll eine Grenzflächenbestimmung durchgeführt werden, so läßt sich anhand der Meßergebnisse die Lage der Grenzfläche korrekt ermitteln.

Meßgeräte mit geführten hochfrequenten Signalen (Pulse, Bursts oder Wellen) zeichnen sich gegenüber Meßgeräten, die hochfrequente Impulse oder Wellen frei abstrahlen (Freifeld-Mikrowellen-Systeme (FMR) bzw. 'echte Radar-Systeme') durch eine wesentlich höhere Echoamplitude aus. Grund hierfür ist, daß der Leistungsfluß ganz gezielt entlang des Oberflächenwellenleiters erfolgt. Weiterhin haben die Meßgeräte mit geführten hochfrequenten Signalen eine höhere Meßempfindlichkeit und Meßgenauigkeit im Nahbereich als Meßgeräte mit frei abstrahlenden Antennen.

Die Länge des Oberflächenwellenleiters ist üblicherweise so bemessen, daß der maximale Meßbereich innerhalb des Behälters abgedeckt wird. Ein Wellenleiter wird entweder von dem Hersteller mit der gewünschten Bemaßung bereitgestellt, oder der Kunde bringt den Wellenleiter vor Ort auf die gewünschte Länge. Nachteilig hierbei ist, daß ein Kunde sich entweder bei der Bestellung oder aber spätestens bei der Erstinstallation auf einen bestimmten Meßbereich einschränken muß. Möchte er anschließend das Gerät an einem Behälter mit abweichender Bemaßung anbringen, so können die notwendigen Änderungen ziemlich aufwendig sein. Im ungünstigsten Fall muß ein neuer Oberflächenwellenleiter gekauft werden.

Der Erfindung liegt die Aufgabe zugrunde, ein TDR-Füllstandsmeßgerät vorzuschlagen, dessen Oberflächenwellenleiter in einfacher Weise an einen beliebigen Meßbereich adaptierbar ist.

Die Aufgabe wird dadurch gelöst, daß der Oberflächenwellenleiter aus mehreren Teilstücken besteht, die teleskopartig ineinanderschiebbar bzw. auseinanderziehbar angeordnet sind. Im Prinzip wird der Oberflächenwellenleiter der erfindungsgemäßen Vorrichtung in Analogie zu einer Teleskopantenne ausgeführt. Entsprechende Teleskopantennen sind sowohl aus dem Bereich der Unterhaltungselektronik als auch aus dem Bereich des Kraftfahrzeugbaus bestens bekannt.

Bei der erfindungsgemäßen Vorrichtung wird der Effekt ausgenutzt, daß hochfrequenten Meßsignale auch an einem hohlen metallischen Leiter entlanggeführt werden können. Da zumindest einige der Teilstücke des Oberflächenwellenleiters einen Hohlraum aufweisen, können nachfolgende Teilstücke in diesen Hohlräumen aufgenommen werden. Ebenso können die Teilstücke bei Bedarf aus den Hohlräumen herausgezogen bzw. heraus-gefahren werden. Problemlos kann der erfindungsgemäße Oberflächen-wellenleiter so an die jeweils verhandene Behältergröße bzw. an die Meßlänge, die der Kunde wünscht, angepaßt werden. Der Kunde ist damit äußerst flexibel, was die Lagerhaltung seines TDR-Füllstandsmeßgeräts betrifft. Darüber hinaus ist es nicht mehr erforderlich, die Verpackung zwecks Versand an die unterschiedlichen Meßgeräte-Dimensionierungen anzupassen. Es genügt eine definierte kompakte Verpackungseinheit. Für die Montage des TDR-Füllstandsmeßgeräts an einem Behälter bietet es sich natürlich an, mit der kurzen eingschobenen Einheit zu arbeiten. Hierdurch wird die Installation des TDR-Füllstandsmeßgeräts an einem Behälter erheblich erleichtert.

Gemäß einer vorteilhaften Weiterbildung der erfindungsgemäßen Vorrichtung ist vorgesehen, daß der Oberflächenwellenleiter aus flexiblen Teilstücken besteht. Eine alternative Ausgestaltung schlägt vor, daß der Oberflächenwellenleiter aus starren Teilstücken besteht, wobei es sich bei den Teilstücken um rohrförmige Teile handelt.

In diesem Zusammenhang ist es als besonders vorteilhaft anzusehen, wenn die Einstellung der gewünschten Länge des Oberflächenwellenleiters über eine entsprechende Steuer-/Regeleinheit automatisch erfolgt.
Darüber hinaus versteht es sich von selbst, daß keine Partikel des Füllguts in die Zwischenräume zwischen den einzelnen Teilstücken gelangen dürfen. Über entsprechende Dichtungen, die aus dem Stand der Technik glechfalls hinlänglich bekannt geworden sind, wird die gewünschte Dichtigkeit problemlos erreicht.

Um die Teilstücke des Oberflächenwellenleiters auf der gewünschten Länge zu arretieren, sind an den Teilstücken Mittel, z.B. Rastelemente vorgesehen, über die die einzelnen Teilstücke in einer festen Position fixierbar sind. Entsprechende Ausgestaltungen sind gleichfalls aus dem Stand der Technik bestens bekannt.

Es versteht sich von selbst, daß die erfindungsgemäße Lösung auch bei der Stabsonde eines kapazitiven Füllstandsmeßgeräts eingesetzt werden kann.

Die Erfindung wird anhand der nachfolgenden Zeichnungen näher erläutert. Es zeigt:
Fig. 1: eine schematische Darstellung eines erfindungsgemäßen TDR-Füllstandsmeßgeräts mit einem Oberflächenwellenleiter der Länge L1 und
Fig. 2: eine schematische Darstellung eines erfindungsgemäßen TDR-Füllstandsmeßgeräts mit einem Oberflächenwellenleiter der Länge L2.

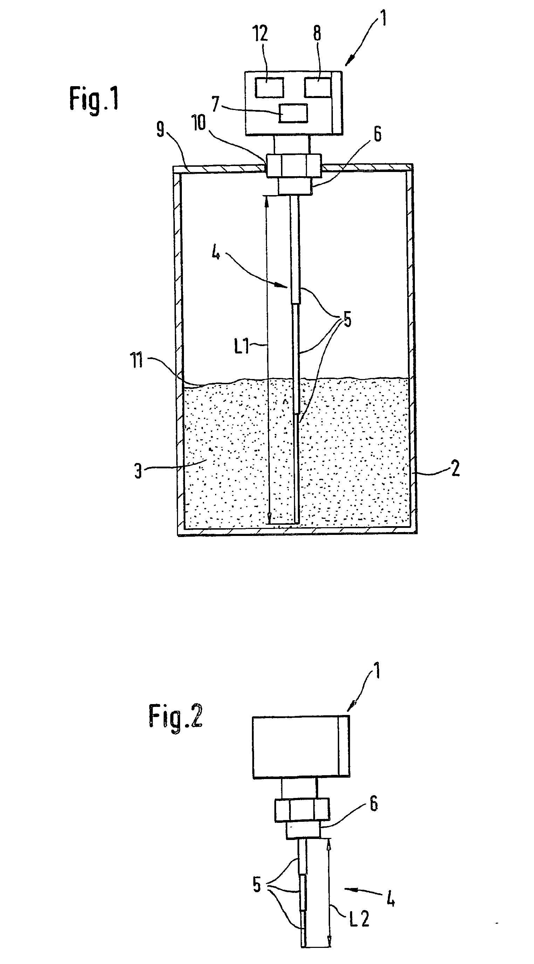

In den beiden Figuren Fig. 1 und Fig. 2 sind schematisch zwei Ausgestaltungen des erfindungsgemäßen TDR-Füllstandsmeßgeräts 1 dargestellt. Wie in Fig. 1 zu sehen ist, ist das Füllstandsmeßgerät 1 in einer Öffnung 10 im Deckel 9 des Behälters 2 befestigt. Meßsignale, die in der Signalerzeugungseinheit 7 erzeugt werden, werden über die Einkoppeleinheit 6 auf den Oberflächenwellenleiter 4 eingekoppelt. Anschließend laufen die Meßsignale an dem Oberflächenwellenleiter 4 entlang in Richtung des Füllguts 3; an der Oberfläche 11 des Füllguts 3 werden die Meßsignale zumindest teilweise reflektiert. Anhand der Laufzeit der Meßsignale wird in der Empfangs-/Auswerteeinheit 12 die Füllhöhe des Füllguts 3 in dem Behälter 2 bestimmt.

Das erfindungsgemäße TDR-Füllstandsmeßgerät 1 unterscheidet sich von den bekannt gewordenen Geräten durch einen Oberflächenwellenleiter 4, dessen Länge in einfacher Weise an jede gewünschte Behälterhöhe adaptiert werden kann. Hierzu besteht der Oberflächenwellenleiter 4 aus mehreren Teilstücken 5, die teleskopartig ineinandergeschoben bzw. auseinandergefahren werden können. In den beiden gezeigten Ausgestaltungen erfolgt das Verfahren der Teilstücke 5 automatisch über die Regel-/Steuereinheit 8.

Um zu verhindern, daß Partikel des Füllguts 3 in den Zwischenraum zwischen zwei aufeinanderfolgenden Teilstücken 5 des Oberflächenwellenleiters 4 gelangen, sind Dichtelemente vorgesehen, die in den Figuren nicht gesondert dargestellt sind. Weiterhin wurde auf die Darstellung von Rastelementen verzichtet, die an den Teilstücken 5 vorgesehen sind, um diese in der gewünschten Position zu fixieren.

## Patentansprüche

1. Vorrichtung zur Bestimmung und/oder Überwachung des Füllstandes eines Füllguts (3) bzw. der Lage der Grenzfläche zwischen zwei Medien oder Phasen in einem Behälter (2) mit einer Signalerzeugungseinheit (7), die hochfrequente Meßsignale erzeugt, einer Einkoppeleinheit (6) und einem Oberflächenwellenleiter (4), wobei die Meßsignale über die Einkoppeleinheit auf den Oberflächenwellenleiter (4) eingekoppelt werden und über den Oberflächenwellenleiter (4) in Richtung des Füllguts (3) geführt werden, und einer Empfangs-/Auswerteeinheit (12), die direkt oder indirekt über die Laufzeit der an der Oberfläche (11) bzw. Grenzfläche des Füllguts (3) reflektierten Meßsignale den Füllstand des Füllguts (3) bzw. die Lage der Grenzfläche in dem Behälter (2) bestimmt,
**dadurch gekennzeichnet**
**daß** der Oberflächenwellenleiter (4) aus mehreren Teilstücken (5) besteht, die teleskopartig ineinanderschiebbar bzw. auseinanderziehbar angeordnet sind.

2. Vorrichtung nach Anspruch 1,
**dadurch gekennzeichnet,**
**daß** der Oberflächenwellenleiter (4) aus flexiblen Teilstücken (5) besteht.

3. Vorrichtung nach Anspruch 1,
**dadurch gekennzeichnet,**
**daß** der Oberflächenwellenleiter (4) aus starren Teilstücken (5) besteht.

4. Vorrichtung nach Anspruch 1,
**dadurch gekennzeichnet,**
**daß** eine Regel-/Steuereinheit (8) vorgesehen ist, über die die Teilstücke (5) des Oberflächenwellenleiters (4) automatisch ineinandergeschoben bzw. auseinandergefahren werden.

5. Vorrichtung nach Anspruch 1,
**dadurch gekennzeichnet,**
**daß** an den Teilstücken (5) Rastelemente vorgesehen sind, über die Teilstücke (5) des Oberflächenwellenleiters (4) fixierbar sind.

6. Vorrichtung nach Anspruch 1,
**dadurch gekennzeichnet,**
**daß** Dichtelemente vorgesehen sind, die das Eindringen von Partikeln des Füllguts (3) in den Zwischenraum zwischen zwei aufeinanderfolgenden Teilstücken (5) des Oberflächenwellenleiters (4) verhindern.

## Claims

1. Unit for determining and/or monitoring the level of a product (3) or the position of the boundary surface between two media or phases in a container (2). This unit has a signal generation unit (7) that generates high-frequency measuring signals, an injection unit (6) and a surface waveguide (4), whereby the measuring signals are injected onto the surface waveguide (4) via the injection unit and are guided via the surface waveguide (4) in the direction of the product (3). The unit further comprises a receiver/evaluation unit (12) that either directly or indirectly determines the level of the product (3) or the position of the boundary surface in the container (2) on the basis of the transit time of the measuring signals reflected at the surface (11) or the boundary surface of the product (3).
The unit is **characterized in that**
the surface waveguide (4) consists of several sections (5) that can be inserted into one another or extended from one another telescopically.

2. Unit as per Claim 1,
**characterized in that**
the surface waveguide (4) is made up of flexible sections (5).

3. Unit as per Claim 1,
**characterized in that**
the surface waveguide (4) is made up of rigid sections (5).

4. Unit as per Claim 1,
**characterized in that**
a control unit (8) is provided via which the sections (5) of the surface waveguide (4) are automatically inserted into one another or extended from one another.

5. Unit as per Claim 1,
**characterized in that**
fixing elements are provided on the sections (5) via which the sections (5) of the surface waveguide (4) can be fixed in place.

6. Unit as per Claim 1,
**characterized in that**
sealing elements are provided that prevent the penetration of particles of the product (3) into the intermediate chamber between two consecutive sections (5) of the surface waveguide (4).

## Revendications

1. Dispositif destiné à la détermination et/ou la surveillance du niveau d'un produit (3) ou de la position de l'interface entre deux produits ou phases au sein d'un réservoir (2), comprenant une unité de génération de signaux (7), qui génère des signaux de mesure de haute fréquence, une unité d'injection (6) et un guide d'ondes superficielles (4), les signaux de mesure étant injectés sur le guide d'ondes superficielles (4) par l'intermédiaire de l'unité d'injection et acheminés en direction du produit (3) par l'intermédiaire du guide d'ondes superficielles (4), et une unité de réception / d'exploitation, qui détermine le niveau de remplissage du produit (3) ou la position de l'interface au sein du réservoir (2) au moyen du temps de propagation des signaux de mesure réfléchis directement ou indirectement au niveau de la surface (11) ou de l'interface du produit (3),
**caractérisé en ce**
**que** le guide d'ondes superficielles (4) se compose de plusieurs sous-éléments (5), qui sont disposés les uns dans les autres ou extractibles de façon télescopique.

2. Dispositif selon la revendication 1,
**caractérisé en ce**
**que** le guide d'ondes superficielles (4) se compose de sous-éléments (5) flexibles.

3. Dispositif selon la revendication 1,
**caractérisé en ce**
**que** le guide d'ondes superficielles (4) se compose de sous-éléments (5) rigides.

4. Dispositif selon la revendication 1,
**caractérisé en ce**
**qu'**est prévue une unité de régulation et de commande (8), par l'intermédiaire de laquelle les sous-éléments (5) du guide d'ondes superficielles (4) sont emboîtés ou déployés automatiquement.

5. Dispositif selon la revendication 1,
**caractérisé en ce**
**que** sont prévus sur les sous-éléments (5) des crans d'arrêt, par l'intermédiaire desquels les sous-éléments (5) du guide d'ondes superficielles (4) peuvent être fixés.

6. Dispositif selon la revendication 1,
**caractérisé en ce**
**que** sont prévus des éléments d'étanchéité, qui empêchent l'infiltration de particules de produit (3) dans l'espace intermédiaire entre deux sous-éléments (5) consécutifs du guide d'ondes superficielles (4).
